# EUROPEAN PATENT SPECIFICATION

(11) **EP 3 129 896 B1**
(45) Date of publication and mention of the grant of the patent: **14.02.2024**
(21) Application number: 15777101.5
(22) Date of filing: 09.04.2015
(51) Int. Cl.: G06N 3/0464, G06N 20/20, G06N 3/084

(54) **AUTHENTICATING PHYSICAL OBJECTS USING MACHINE LEARNING FROM MICROSCOPIC VARIATIONS**
AUTHENTIFIZIERUNG VON PHYSISCHEN OBJEKTEN MIT MASCHINELLEM LERNEN AUS MIKROSKOPISCHEN VARIATIONEN
AUTHENTIFICATION D'OBJETS PHYSIQUES PAR APPRENTISSAGE AUTOMATIQUE À PARTIR DE VARIATIONS MICROSCOPIQUES

(30) Priority: 09.04.2014 US 201461977423 P
(43) Date of publication of application: 15.02.2017
(73) Proprietor: Entrupy Inc., New York, NY 10012 (US)
(72) Inventor: SHARMA, Ashlesh, Kirkland, WA 98034 (US); SUBRAMANIAN, Lakshminarayanan, New York, NY 10012 (US); SRINIVASAN, Vidyuth, Brooklyn, NY 11225 (US)
(74) Representative: Isarpatent
(86) International application number: PCT/US2015/025131
(87) International publication number: WO 2015/157526

(56) References cited:
- US-A1- 2008 082 468
- US-A1- 2009 297 016
- US-A1- 2009 297 016
- US-A1- 2010 183 217
- US-A1- 2012 253 792
- US-A1- 2013 088 555
- US-A1- 2013 284 803
- US-A1- 2013 284 803
- Viren Jain ET AL: "Machine learning of image analysis with convolutional networks and topological constraints", Cognitive Science, 1 January 2010 (2010-01-01), XP055230190, Retrieved from the Internet: URL:http://dspace.mit.edu/bitstream/handle /1721.1/57546/639292432-MIT.pdf?sequence=2 [retrieved on 2015-11-23]
- Alex Krizhevsky ET AL: "ImageNet Classification with Deep Convolutional Neural Networks", Advances in Neural Information Processing Systems 25, 1 January 2012 (2012-01-01), pages 1097-1105, XP055309176, Lake Tahoe, Nevada Retrieved from the Internet: URL:https://papers.nips.cc/paper/4824-imag enet-classification-with-deep-convolutiona l-neural-networks.pdf [retrieved on 2016-10-10]
- JAIN.: 'Machine leaming of image analysis with convolutional networks and topological constraints.' DISS. MASSACHUSETTS INSTITUTE OF TECHNOLOGY., [Online] February 2010, XP055230190 Retrieved from the Internet: <URL:http://virenjain.org/thesis/VirenJainT hesis_official.pdf>

## Description

### TECHNICAL FIELD

The present disclosure relates to authenticating an object, and more specifically, to a method for classifying a microscopic image and a system for classifying a microscopic image.

### DISCUSSION OF THE RELATED ART

Counterfeiting of physical goods is global problem. It is estimated that 7% of world trade involves counterfeit goods. There have been various technological solutions over the years that have tried to alleviate the counterfeiting problem: from overt technologies such as holograms and barcodes to covert technologies like taggants. However, these solutions offer limited value in helping the end consumer authenticate objects and generally involve the use of embedded taggants such as RFID microchips.

Other approaches to authentication of goods may involve utilizing the skills of a trained expert, who is familiar with the nuances that tend to differentiate a genuine article from a high-quality facsimile. However, skills such as these may be in short supply and might not be readily available at the point of sale. Moreover, even after a product has been authenticated, the authenticator may provide a certificate of authenticity but this too may be forged.

The prevalence of counterfeit products in the marketplace may reduce the income of legitimate manufacturers, may increase the price of authentic goods, and may stifle secondary marketplaces for luxury goods, such as on the second hand market. Accordingly, the prevalence of counterfeit goods is bad for the manufacturers, bad for the consumers and bad for the global economy.

US 2009/297016 disclose methods for classifying different parts of a sample into respective classes based on an image stack that includes one or more images.

US 2013/284803 disclose systems and methods for identifying, tracking, tracing and determining the authenticity of a good. In some embodiments, a system includes an imaging system, a database, and an authentication center. The imaging system is configured to capture an image of a unique signature associated with a good at the good's origin. The unique signature can be, for example, a random structure or pattern unique to the particular good. The imaging system is configured to process the image of the good to identify at least one metric that distinguishes the unique signature from unique signatures of other goods. The database is configured to receive information related to the good and its unique signature from the imaging system; and is configured to store the information therein. The authentication center is configured to analyze the field image with respect to the information stored in the database to determine whether the unique signature in the field image is a match to the captured image stored in the database.

### SUMMARY

The present invention provides a method for classifying a microscopic image and a system for classifying a microscopic image, as defined in the appended set of claims.

### BRIEF DESCRIPTION OF THE DRAWINGS

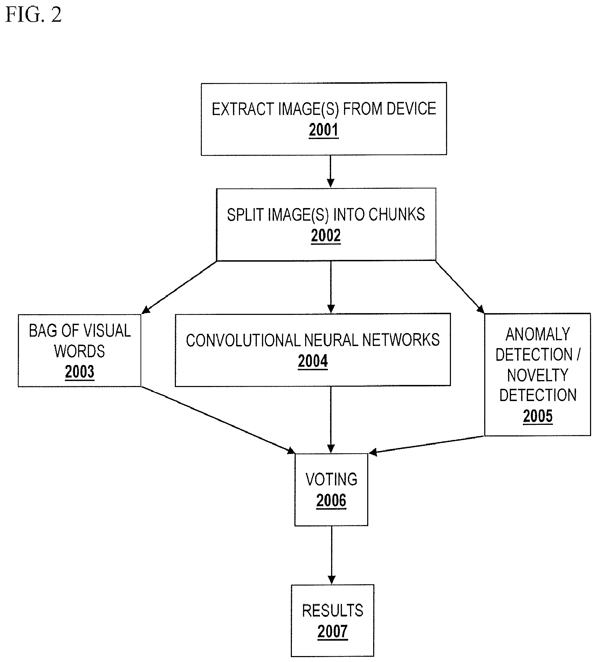

Further objects, features and aspects of the present disclosure will become apparent from the following detailed description taken in conjunction with the accompanying Figures. FIG.2 is the only one depicting an embodiment falling under the scope of the independent claims. The other Figures depicts examples or embodiments that are useful for understanding the invention, without actually comprising all the features of the independent claims.
FIG. 1 is a flow chart illustrating an exemplary method of classification and authentication of physical objects from microscopic images using bag of visual words according to an exemplary embodiment;
FIG. 2 is a flow chart illustrating an exemplary method of classification and authentication of physical objects from microscopic images using voting based on bag of visual words, convolutional neural networks and anomaly detection according to an exemplary embodiment of the present disclosure;
FIG. 3 is a flow chart illustrating an exemplary method of training the machine learning system by extracting microscopic images from physical object and generating a mathematical model from a machine learning system according to an exemplary embodiment;
FIG. 4 is a flow chart illustrating an exemplary diagram of the testing phase of the system by using the trained mathematical model according to an exemplary embodiment;
FIG. 5 is block diagram illustrating an exemplary 8-layer convolutional neural network;
FIG. 6 is a block diagram illustrating an exemplary 12-layer convolutional neural network;
FIG. 7 is a block diagram illustrating an exemplary 16-layer convolutional neural network;
FIG. 8 is a block diagram illustrating an exemplary 20-layer convolutional neural network;
FIG. 9 is a block diagram illustrating an exemplary 24-layer convolutional neural network;
FIG. 10 is an image illustrating an exemplary convolutional neural network pipeline showing the first and third convolutional layers of a fake image according to an exemplary embodiment;
FIG. 11 is an image illustrating an exemplary convolutional neural network pipeline showing the first and third convolutional layers of an authentic image according to an exemplary embodiment;
FIG. 12 is an image illustrating an exemplary fully connected layer 6 for an authentic image and a fake image according to an exemplary embodiment;
FIG. 13 is a graph illustrating an exemplary fully connected layer 7 for an authentic image and a fake image according to an exemplary embodiment;
FIG. 14 is a block diagram illustrating an exemplary multiple scales processing and classification across multiple convolutional nets in parallel;
FIG. 15 is a block diagram illustrating an exemplary ensemble solution for classification of microscopic images across an ensemble of convolutional networks according to an exemplary embodiment;
FIG. 16 is a diagram illustrating a mobile application to authenticate physical objects according to an exemplary embodiment;
FIG. 17 is a schematic diagram illustrating an example of a server which may be used in the system or standalone according to various embodiments described herein; and
FIG. 18 is a block diagram illustrating a client device according to various embodiments described herein.

### DETAILED DESCRIPTION OF THE DRAWINGS

Throughout the drawings, the same reference numerals and characters may be used to denote like features, elements, components, or portions of the illustrated embodiments. Moreover, while the present disclosure will now be described in detail with reference to the figures, it is done so in connection with the illustrative embodiments and is not limited by the particular embodiments illustrated in the figures.

The exemplary systems and methods according to exemplary embodiments of the present disclosure authenticate physical objects using machine learning from microscopic variations. The exemplary systems and methods may be based on the concept that objects manufactured using prescribed or standardized methods may tend to have similar visual characteristics at a microscopic level compared to those that are manufactured in non-prescribed methods, which are typically counterfeits. Using these characteristics, distinct groups of objects may be classified and differentiated as authentic or inauthentic.

Exemplary embodiments of the present invention may use a handheld, low-cost device to capture microscopic images of various objects. Novel supervised learning techniques may then be used, at the microscopic regime, to authenticate objects by classifying the microscopic images extracted from the device. A combination of supervised learning techniques is used. These techniques include the following: (i) SVM based classification using bag of visual words by extracting features based on histogram of oriented gradients, (ii) classifying using multi-stage convolutional neural networks by varying the kernels (filters), sub-sampling and pooling layers, here, different architectures (e.g. configuration of stages) may be used to decrease the test error rate, and (iii) classification using anomaly detection techniques, by ranking vectors corresponding to their nearest neighbor distances from the base vectors.

### Exemplary Bag of Visual Words

A system according to an exemplary embodiment of the present disclosure may comprise a five stage process in classifying microscopic images of an item to verify authenticity: (i) Extract features using a patch, corner or blob based image descriptors, (ii) quantize the descriptors such that nearest neighbors fall into the same or nearby region (bag), which form the visual words, (iii) histogram the visual words in the candidate microscopic image, (iv) use a kernel map and linear SVM to train the image as authentic (or label the image as authentic), and (v) during the testing phase, a new microscopic image may be classified using the same procedure to verify if the image of the item, and therefore the item, is authentic or not. The level of quantization, feature extraction parameters, and number of visual words may be important when looking for microscopic variations and classifying images of items at a microscopic level.

### Exemplary Feature Extraction

Once an image of an item is captured using the microscope imaging hardware, the image is split into chunks of smaller images for processing. Splitting an image into smaller chunks may provide multiple benefits including: (i) the field of view of the microscopic imaging hardware is large (compared to other off-self microscopic imaging hardware) around 12mm x 10mm. According to some exemplary embodiments, microscopic variations may be analyzed at the 10 micrometer range, so preferably the images may be split into smaller images to aid in processing these variations. (ii) Splitting the image into smaller chunks may help in building the visual vocabulary and accounting for minor variations.

Each image chunk or patch may then be processed using a Laplacian of Gaussian filter at different scales (for scale invariance) to find the robust keypoint or blob regions. A square neighborhood of pixels (e.g. in some embodiments, 8x8, 16x16, 32x32) may be selected around the keypoints to compute histogram of oriented gradients. To achieve rotation invariance, the histograms may be computed based on the orientation of the dominant direction of the gradient. If the image is rotated, then the dominant direction of the gradient remains the same and every other component of the neighborhood histogram remains the same as the non-rotated image. The descriptor or histogram vector may be, for example, a 128 dimensional number and the descriptors may be computed for every keypoint, resulting in computed descriptors of the image that is robust to changes in scale or rotation (descriptor or histogram vector may be a n-dimensional number).

Since Laplacian of Gaussian is slow in terms of execution time, FAST corner detection algorithm may also be used to speed up process of finding the keypoints. While corners are well represented by FAST, the edges and blobs are not taken into account. To mitigate this issue, the image may be divided into equal non-overlapping windows and then force the FAST detector to find keypoints in each of these windows, thereby giving a dense grid of keypoints to operate. Once the keypoints are identified, the process involves computing the histogram of oriented gradients to get the set of descriptors.

### Exemplary Quantization

The descriptors are clustered using k-means clustering based on the number of visual words. The number of visual words which are essentially the number of clusters may be used to control the granularity required in forming the visual vocabulary. For example, in hierarchical image classification, at a higher level with inter-object classification the vocabulary can be small; while in fine-grained image classification as ours, the vocabulary needs to be large in order to accommodate the different microscopic variations. Hence, in some embodiments a fixed number of visual words might not be used, but a range may be used instead so that the diversity in microscopic variations may be captured. For example, k-means clustering may be run for a range of clusters instead of a fixed sized cluster. The k-means cluster centers now form the visual vocabulary or codebook that is used in finding whether a reference image as enough words to classify it as authentic (or non-authentic).

### Exemplary Histogram of visual words

The next step in the algorithm may include computing the histogram of visual words in the image chunk. The keypoint descriptors may be mapped to the cluster centers (or visual words) and a histogram may be formed based on the frequency of the visual words. Given the histogram of visual words the visual words of one item's image may now be attempted to match another item's image. The visual words of a candidate image of an item which needs to be classified as authentic or non-authentic can be compared with a baseline or training image (which has its own set of visual words) to classify the candidate image. The process may be automated, so in some exemplary embodiments, a SVM based classifier may be used.

### Exemplary SVM classifier

Once the visual words for one or more training images are obtained, Support Vector Machine (SVM) is used to train the system. According to some exemplary embodiments, three types of SVMs may be used including: (i) linear SVM, (ii) non-linear Radial Basis Function kernel SVM, and (iii) a 2-linear *χ*² SVM. While linear SVM is faster to train, the non-linear and the 2-linear *χ*² SVM may provide superior classification results when classifying large number of categories. In some embodiments, the system may be trained with the images using one vs. all classification, but this approach may become unscalable as the training set increases (e.g. number of categories increase). In other embodiments, another approach such as the one vs. one approach where the pairs of categories are classified. In some exemplary embodiments, both the approaches may be employed with both providing comparable performance under different scenarios.

During the first stage of the algorithm, before feature extraction the image is split into chunks. Splitting or dividing window step size may make the divided images either non-overlapping or overlapping. The splitting may be performed with a range of window sizes with exemplary learning results shown in detail below.

### Exemplary Convolutional Neural Networks

Exemplary convolutional neural networks may be successful in classifying image categories, video sample and other complex tasks with little or no supervision. The state-of-the-art machine recognition systems use some form of convolutional neural networks and the techniques have achieved the best results so far when applied to standard vision datasets such as Caltech-101, CIFAR and ImageNet.

In convolutional neural networks (convnets), each stage may comprise a convolution and sub-sampling procedure. While more than one stage may improve classification, the number of stages is based on the classification task. There is no optimal number of stages that suits every classification task. Therefore according to some exemplary embodiments, one, two, or three stage convnets is used with the best stage selected based on the classification accuracy.

One stage convnets includes a convolution layer and a sub-sampling layer, after which the outputs are fully connected neural nets and trained using backpropagation. The problem with one stage convnets is the fact that the gradient based learning approach identifies edges, corners and low-level features, but it fails to learn the higher-level features such as blobs, curves and other complex patterns. While the classification accuracy rates may be more than 80%, since the higher-level features might not be captured, the one-stage convnet may seems suboptimal in some cases, but may be used in other exemplary embodiments.

Two stage convnets includes two sets of alternating convolution and sub-sampling layers. The final two layers are fully connected and trained using the backpropagation algorithm. The two-stage convnet identifies blobs, curves and features that are important classification cues in the microscopic regime. When observing a microscopic image of a surface the features that standout apart from edges and corners are, complex curves, blobs, and shapes. These features are not captured just because a two-stage convent was used. Appropriate convolution and sampling techniques may be required to achieve it and this will be described in more detail in this section. With two-stage convnets more than 90% classification accuracy may be achieved.

Three stage convnets comprises three sets of alternating convolution and sub-sampling layers and two final layers that are fully connected. The entire network is trained using backpropagation algorithm. Three stage convnets may perform worse than the 1-stage and 2-stage convnets with classification accuracy around 75%. One reason for this behavior is the lack of higher-level features at the microscopic regime after complex curves and shapes. In general image classification tasks, for example, if classifying dogs vs. cats, a two-stage convnet would identify curves and some shapes, but would never be able to identify the nose, ear, eyes which are at a higher-level than mere curves. In these classification tasks, it may be preferable to use three-stage (or at times four or five stages) convnets to identify higher-level features. In some embodiments, since the microscopic patterns do not have a specific structure, a three-stage convnet may be suboptimal, but may be used in other exemplary embodiment. In fact, due to the last stage (convolution and sub-sampling) some of the features that are required in classification might be lost.

### Exemplary Convolution Layers

Feature extraction in object recognition tasks using bag of visual words method may involve identifying distinguishing features. Hand crafted feature extraction using Scale Invariant Feature Transform (SIFT), Speeded Up Robust Features (SURF), and other techniques may be used. If the image statistics are already known then hand-crafting features may be particularly well suited. But if the image statistics are unknown then hand-crafting features may be a problem since it is unclear what would be the set of distinguishing features --features that help to classify the image. To avoid this issue, multiple convolutions may be performed on the candidate image to extract or capture different types of features. In some embodiments, 96 types of convolution kernels may be used on the candidate image to generate a feature map of size 96, as part of the convolution layer. These convolutions capture the diverse set of distortions possible on the microscopic image. Since the image is subjected to variations and distortions from image capture and tampering of the object's surface, convolutions may be applied to the image, to make the network robust against such distortions. Also, these set of filters are trainable, so the filters in the convolution layers may be trained based on microscopic image. Trainable filters are essential in order to prevent the classification algorithm from being dependent on a fixed set of filters/convolutions. To make the filters trainable, a scalar term that is trainable may be used, along with a non-linear function such that the *i^{th}* feature map *mᵢ* = *gᵢ* tanh(*fᵢ* * *xᵢ*), where *gᵢ* is the scalar term, tanh is a non-linear function, *fᵢ* is the filter and *xᵢ* is the image.

### Exemplary Sub-sampling Layers

Once convolution is performed on the image, the output may comprise a set of feature maps. Each feature map may then be maxpooled, contrast normalized to generate a reduced size feature map. This is the process of sub-sampling, which may be done to reduce the dimensionality of feature maps along with improving the robustness of large deviations. While convolution provides robustness against distortions, sub-sampling provides robustness in terms of shifts, translations and variations that are larger than minor distortions. A sliding window of a range of sizes from 4x4 to 16x16 pixels with a step of 4, may be used to compute the maxpool of these window patches to form the sub-sampled feature map. The feature maps are then contrast normalized using a Gaussian window to reduce the effects of spurious features. Varying the window size (and step size) changes the test error rate in significant ways. As window size increases, the test error rate increases. This is partly because higher-level features are lost when maxpooled from a large area opposed to a small area. Also, the "averaging" performed by the local contrast normalization increases, giving rise to flat features with no distinguishable characteristics. Hence, in preferred embodiments, the window size is kept within a certain limit (e.g. 4x4, 8x8 or 16x16) in the sub-sampling layers.

Average pooling may also be performed to normalize the effects of minor distortions and spurious features. The pooling procedure models the complex brain cells in visual perception and the local contrast normalization follows certain neuroscience models.

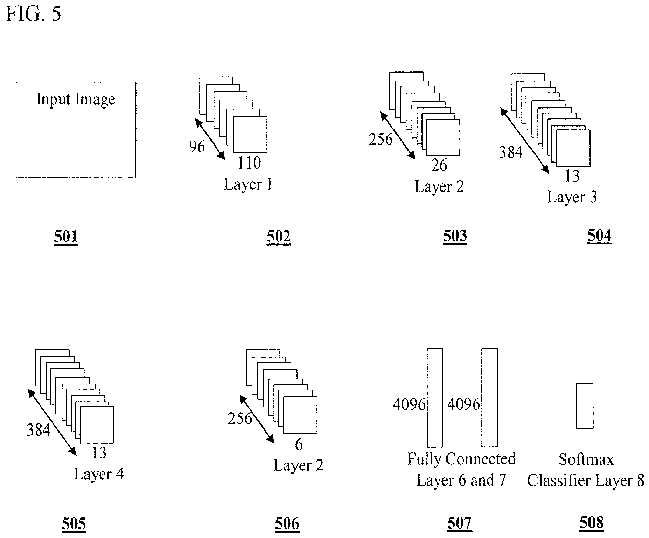

Final two layers are fully connected and a linear classifier may be used to classify the final output values. The final two layers act as multi-layered neural networks with hidden layers and a logistic regression for classification. In the final layer, a soft-max criterion or a cross-entropy based criterion can be used for classification. SVM based techniques may also be used to classify the output of the final layer. An example of the entire 2-stage 8-layer convnet is presented in Figure 5. In Figure 5, the first stage is 501, 502, 503, 504 and 505, 506, 507, 508 is the second stage.

Feature extraction in object recognition tasks using bag of visual words method involves identifying distinguishing features. Hand crafted feature extraction using DSIFT, DAISY and other techniques may be used. If the image statistics is already known then hand-crafting features may be used. But if the image statistics are unknown then hand-crafting features would be a problem since it is unclear what would be the set of distinguishing features -features that help to classify the image. Both fine-grained and macro features in an image might be lost because the hand crafted feature might fail to identify them as regions or points of interest. To avoid this issue in classifying microscopic images, Convolutional Neural Networks (CNN) may be used.

CNNs are layers of operations that are performed on the images. Generally, the more layers are used, the better the performance or accuracy of the CNN model. The depth of CNNs is an important hyperparameter that may determine the accuracy of classifying or learning complex features. When observing a microscopic image of a surface the features that standout apart from edges and corners are, complex curves, blobs and shapes. These higher level features are not captured in traditional computer vision pipeline consisting of feature detector, quantization and SVM or k-NN classifier. While shallow layer convolutional nets learn features such as points and edges, they do not learn mid to high level features such as blobs and shapes. Microscopic features tend to have diverse features and it is important learn these features at different levels (mid to high level) of granularity. To get the network to learn these higher level features CNNs that are sufficiently deep that have multiple layers may be used.

According to some examples , three types of convolutional neural networks (CNN) architecture may be used to achieve a high level of accuracy across the datasets of various microscopic images of materials. The first architecture is an 8-layer network of convolution, pooling and fully-connected layers. In the second architecture we remove one of the fully connected layers, but reduce the filter size and stride in the first convolution layer in order to aid the classification of fine-grained features. The third architecture or technique is for identifying regions within images using region based CNN (R-CNN). A region selector is run over the image which provides around 2000 candidate regions within the image. Each region is then passed to a CNN for classification.

The first network architecture consists of 3 convolution layers along with 3 max-pooling layers and ReLU (Rectified Linear Unit), followed by 2 independent convolution layers (which do not have max-pooling layers) and 3 fully connected layers in the final section. The final classifier is a softmax function which gives the score or probabilities across all the classes. The architecture is presented in Figure 5. The input RGB (3 channel) image 501 is downsampled to 256x256x3 and is then center cropped to 227x227x3 before entering the network. In the first convolution layer the input image is convolved with 96 different filters with a kernel size of 11 and stride 4 in both x and y directions. The output 110x110x96 feature map 502 is processed using ReLU, max-pooled with kernel size 3, stride 2 and is normalized using local response normalization to get 55x55x96 feature map. Similar operations may be performed on the feature maps in subsequent layers. In layer 2, the feature maps may be convolved, processed using ReLU, max-pooled and normalized to obtain a feature map 503 of size 26x26x256. The next two layers (layers 3, 4) 504 and 505 are convolution layers with ReLU but no max-pooling and normalization. The output feature map size is 13x13x384. Layer 5 consists of convolution, ReLU, max-pooling and normalization operations to obtain a feature map 506 of size 6x6x256. The next two layers (layers 6, 7) 507 may be fully connected which outputs a 4096 dimensional vector. The final layer is C-way softmax function 508 that outputs the probabilities across C classes.

Various types of convolution kernels may be used on the candidate image to generate a feature maps of different sizes, as part of the convolution layers. These convolution capture diverse sets of distortions possible on the microscopic image. Since the image is subjected to variations and distortions from image capture and tampering of the object's surface, convolutions may be applied to the image, to make the network robust against such distortions. Also, these set of filters may be trainable, so the filters in the convolution layers get trained based on microscopic image. Trainable filters may be particularly useful so that the classification algorithm is not dependent on a fixed set of filters/convolutions.

Once convolution is performed on the image, the output may be a set of feature maps. Each feature map is then maxpooled, normalized to generate a reduced size feature map. This is the process of sub-sampling, which is done essentially to reduce the dimensionality of feature maps along with improving the robustness of large deviations. While convolution provides robustness against distortions, sub-sampling provides robustness in terms of shifts, translations and variations that are larger than minor distortions. Varying the window size (and step size) changes the test error rate in significant ways. This is partly because higher-level features are lost when maxpool is performed from a large area opposed to a small area. Also, the "averaging" performed by the local response normalization increases giving rise to flat features with no distinguishable characteristics. Hence the step size is kept within a certain limit in the sub-sampling layers. Average pooling may also be performed to normalize the effects of minor distortions and spurious features.

In the second architecture, the filter size and stride may be reduced in the first convolution layer. Instead of kernel size of 11, a kernel size of 8 may be used and instead of stride 4, a stride of 2 may be used. This change increases the number of parameters hence training may be performed with a much smaller batch size. The training batch size may be reduced from 250 images to 50 images. This type of technique of reducing the filter size and decreasing the stride is done to increase the recognition/classification of fine grained features. The only change in the second architecture compared to the first architecture is the reduction in the filter and stride sizes in the first convolution layer. Since the first layer is different, the pre-trained weights are not used. Rather, the entire network may be trained from scratch using new sets of weight initialization, biases, learning rates and batch sizes. Due to the depth of the network it is prone to overfitting, so data augmentation may be used to increase the number of images in the dataset. Label-preserving data augmentation techniques such as translation, shifts, horizontal and vertical flips, random cropping of 227x227 regions (e.g. from the original 256x256) and rotations may be used. These augmentation techniques may be used to increase the dataset by 50x. Also, random dropouts may be used in the final two layers to regularize and reduce overfitting.

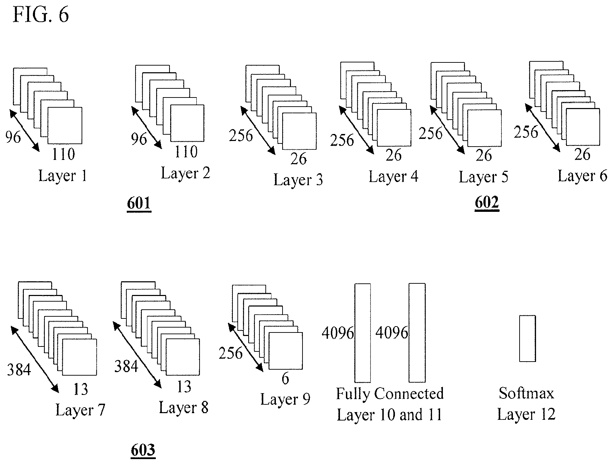

The 8-layer CNN may be extended to 12, 16, 20 and 24 layer deep CNNs. As the number of layers is increased, the network learns the fine grained features that distinguishes two or more classes from each other. The architecture of the 12-layer CNN is presented in Figure 6. The first two layers 601 consists of convolution layers along with max-pooling layers and ReLU (Rectified Linear Unit), followed by four independent convolution layers 602 (which do not have max-pooling layers). This is followed by three sets convolution, max-pooling, and ReLU layers 603 and two fully connected layers in the final section. The final classifier is a softmax function which gives the score or probabilities across all the classes.

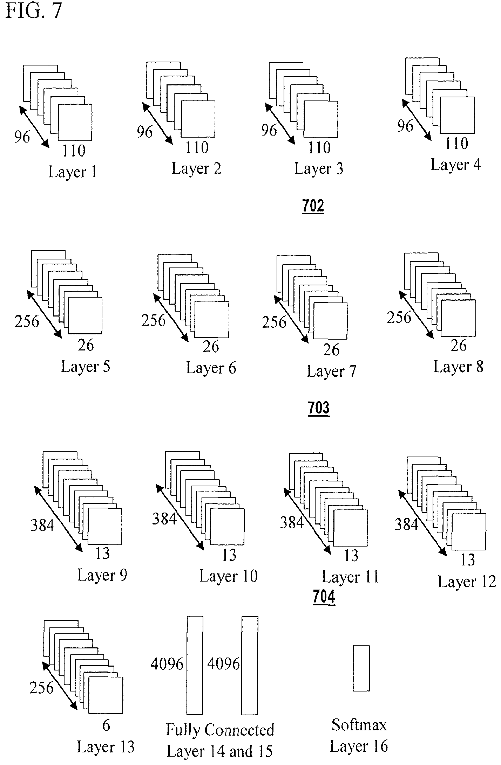

The architecture for the 16-layer CNN is presented in Figure 7. The 12-layer CNN is extended by adding two convolution layers after the first two 110x110x96 layers 702; the 26x26x256 layers 703 remain the same as in the 12-layer CNN; two additional convolution layers 13x13x384 are added 704.

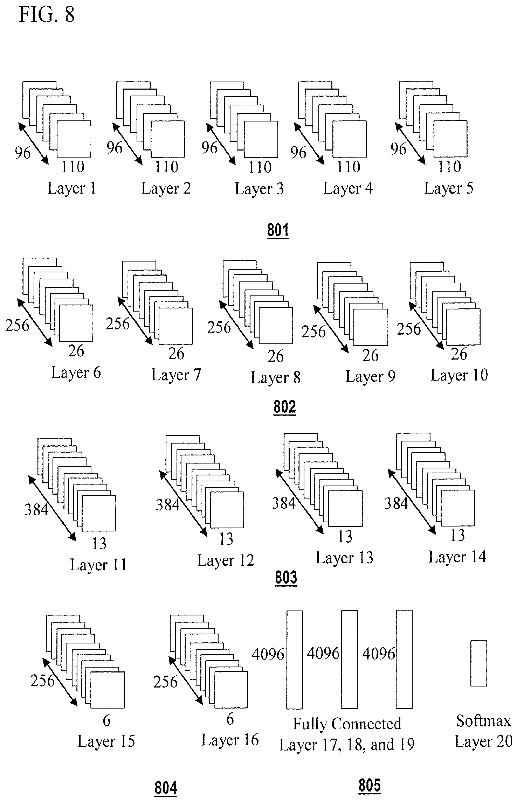

The 20-layer CNN is an extension of the 16-layer CNN presented in Figure 8. Additional 110x110x96 layer 801, 26x26x256 layer 802 and 13x13x384 layer 803 and 804, one additional fully connected layer 805 are added to extend the architecture to a 20-layer CNN.

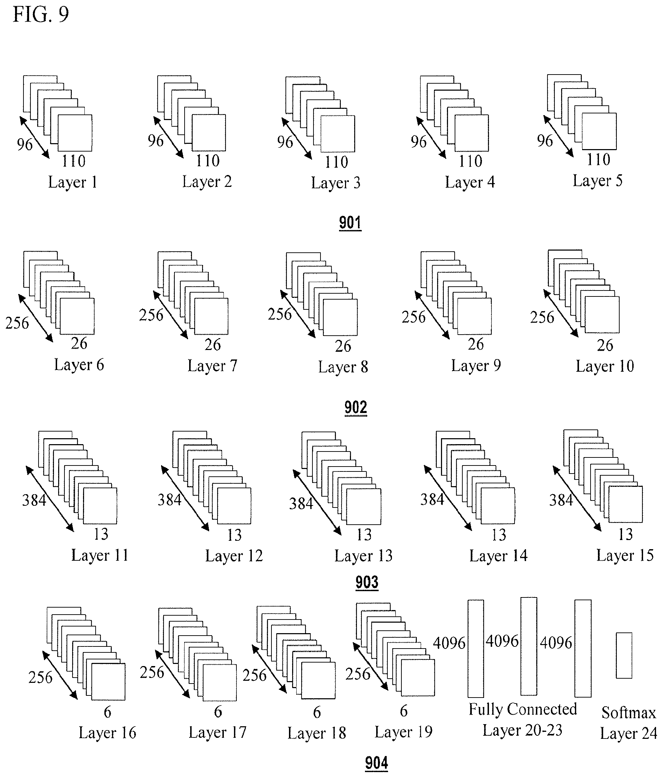

For the 24-layer CNN presented in Figure 9, there may be five 110x110x96 layers 901, five 26x26x256 layers 902, five 13x13x256 layers 903, four 6x6x256 layers 904 and four fully connected layers 905, and finally a softmax function. In general, an n-layer CNN that can classify microscopic images may be used.

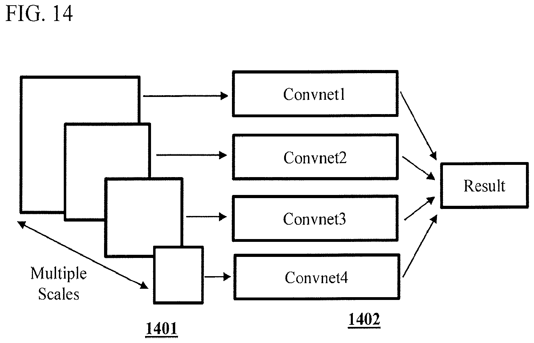

With each architecture presented above (8-layer, 12-layer, 16-layer, 20-layer, 24-layer), a multiscale approach may be used to process microscopic images at different scales and image resolutions. The multiple scale approach is presented in Figure 14. The image is introduced to the convolutional network at multiple scales, resolutions and image sizes 1401. The kernels (filter size) and stride in the convolutional layers are applied from 1x1 to 15x15 with multiple strides (1 to 8) in 1402, so that variations in the image scales are captured by these convolutional layers.

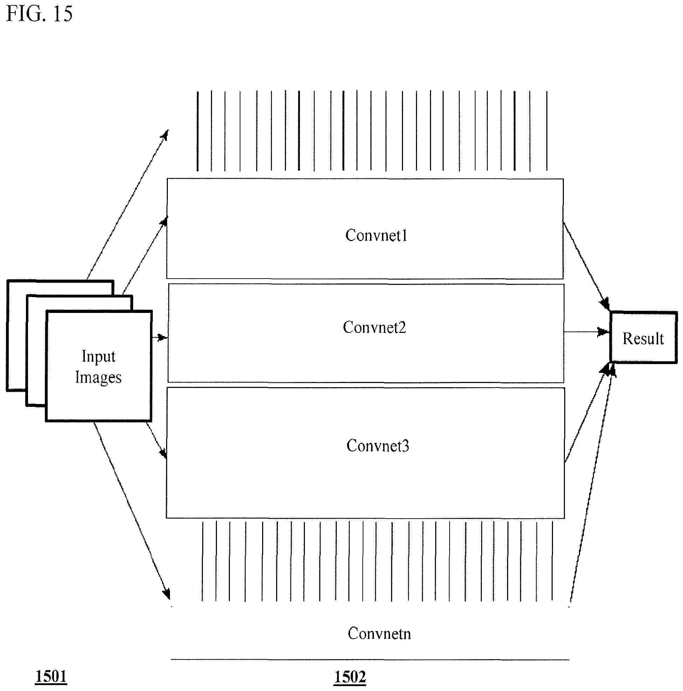

The CNN architectures or models can classify images and show that the filters are learnable across the entire network. Also, different architectures may be combined and the softmax probability may be pooled across these architectures to determine the class of the image. This ensemble approach shown in Figure 15, aggregates the learned features across different models/architectures 1502 and provides a comprehensive approach to classify images. For example, if the first 8-layer model learns the curves in order to differentiate the images 1501, the 12-layer model might learn blobs, corners to differentiate the images between the classes. This ensemble approach of combining results from multiple models may be used in differentiating image classes across multiple features. The final result is the average or mean of the results across the entire the ensemble.

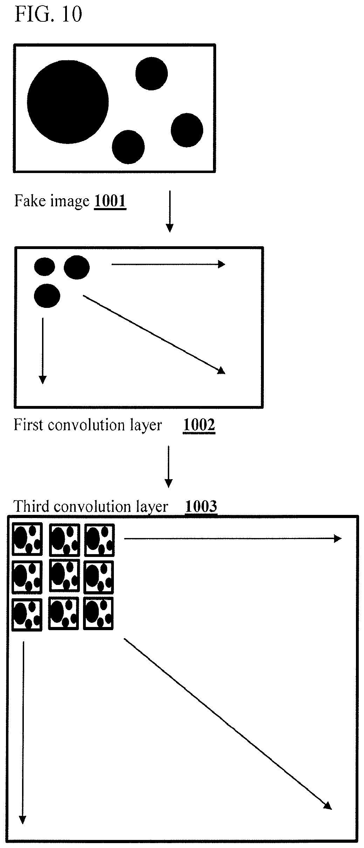

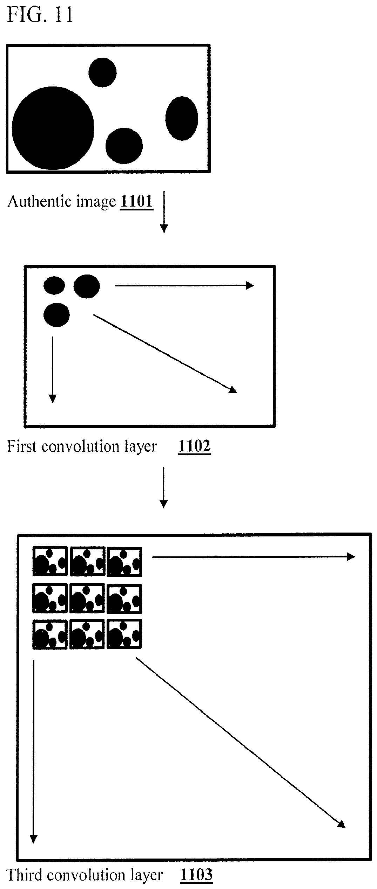

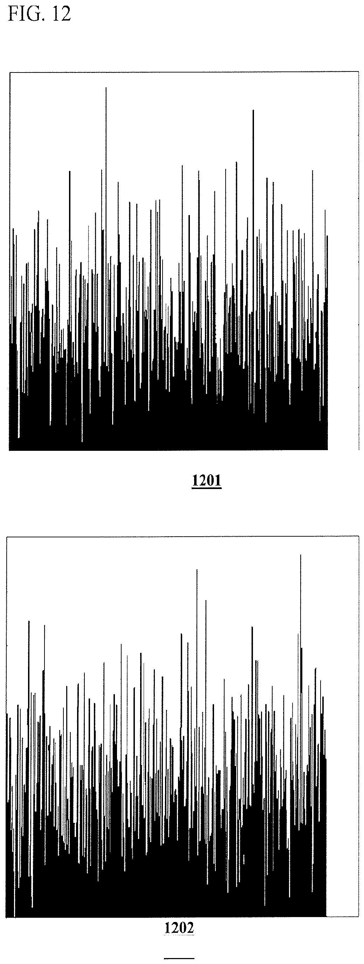

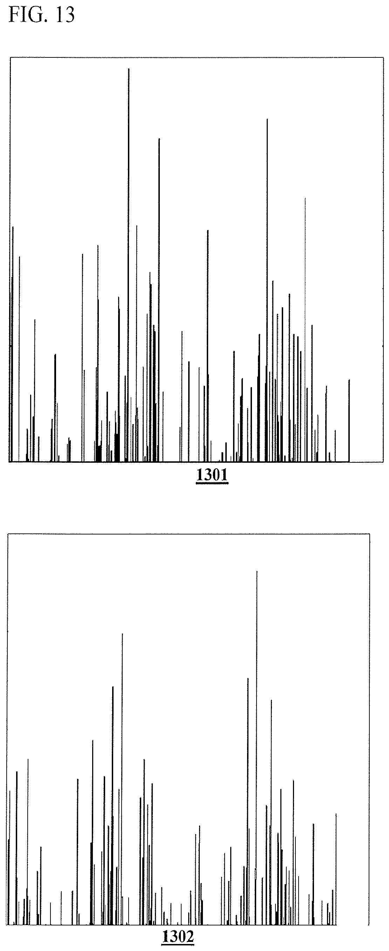

Figure 10, Figure 11, Figure 12, and Figure 13 show the CNN pipeline in action classifying two images. One is a microscopic image of the outer fabric of an authentic LOUIS VUITTON Monogram bag 1001 and another is a microscopic image of the outer fabric of a counterfeit LOUIS VUITTON Monogram bag 1101. To the naked eye, it may be hard to distinguish between the authentic and fake images, as both the images look almost the same. But the CNN successfully distinguishes/classifies the images into authentic and fake classes. The convolution layer 1 1002 and 1102 shows the first 36 filters (out of the 96) for each image and convolution layer 3 1003 and 1103 shows the 384 filters of each image. While both images look similar there are minor differences. In the fully connected layer 6 (fc6) 1201 and 1202, the 4096 dimensional vector of each image is different. Similarly in the fully connected layer 7 (fc7) 1301 and 1302, the 4096 vectors corresponding to each image is different (the two vectors can now be distinguished and thereby the images may be distinguished). After fc7, the softmax function takes the 4096 vector as input and outputs the scores/probabilities for each class.

Data augmentation techniques such as translation, shearing, rotation, flipping, mirroring, distortions (within narrow and large windows), dilations and transform the image across multiple kernels -- label preserving transformations - may be used to increase the dataset size. This helps the models to avoid overfitting as more transformations of the image is part of the training set.

Region based CNNs: In the third type of architecture, R-CNN which obtains candidate regions with an image may be used and these candidate images are used as inputs to the CNN. Selective selection techniques may be used to get bounding boxes as regions in an image. Once these candidate regions are identified, these regions may be extracted as images, scale to 256x256 which is the dimension required for input to the CNN. The selective selection technique gives around 2000 regions per image, so the dataset increases by 2000x. Due to this massive increase in the training set, the first "fine-tuning" CNN architecture is used to train the images. The rationale for the region based CNN is as follows. If two microscopic images, one authentic and one fake differ only in one specific area within an image, then a very deep network may be needed to classify the two images. Instead the current framework or architecture may be used and the region based selection technique may be used to identify the regions and classify the image accordingly.

This system may be evaluated on 1.2 million microscopic images spread across the following objects and materials: (1) Leather: 30,000 microscopic images may be captured from 20 types of leather. (2) Fabric: 6,000 images may be extracted from 120 types of fabric. (3) Luxury designer bags: 20,000 images may be extracted from 100 luxury designer bags obtained from an online luxury resale site. A number of fake handbags purchased from street hawkers and online fake luxury sites may also be used. These include the so called "superfakes" which are very similar to the original bags, but might differ by a small amount in a specific region. Due to these high quality fakes, microscopic images may be extracted from every region of a bag such as the handle, outer surface, trim, lining, stitching, zipper, inner surface, metal logos and metal hardware links. (4) Plastic: 2000 images may be extracted from 15 types of plastic surfaces. (5) 2000 images may be extracted from 10 types of paper. (6) Jersey: 500 images may be extracted from two authentic NFL jerseys purchased from NFL store; and 2 fake NFL jerseys obtained from street hawkers. (7) Pills: 200 images may be extracted from several pharmaceutical pills to show the variation and classification results.

Each object/material dataset may be randomly split into three sets: training set, validation set, test set, such that training set contains 70% images, validation set contains 20%, and the test set contains 10% of the images. The algorithm runs on the training set and the validation accuracy is tested on the validation set. Once the learning cycle (training, validation) is completed (either by early stopping, or until the max iteration is reached), the algorithm is run on the test set to determine the test set accuracy. A 10-fold cross validation accuracy may be provided on the test set. (The dataset is split into training, validation, testing set 10 times and the accuracy is determined each time. 10-fold cross validation accuracy is the average test accuracy across 10 trials).

From the bag of visual words perspective, four types of classification methods may be applied. (i) DSIFT for dense feature extraction, k-means for quantization, and SVM for final classification, (ii) DAISY for dense feature extraction, k-means for quantization and SVM for final classification. For the rest, k-NN instead of SVM may be used in the final step.

For CNN, in order to avoid overfitting and get good test accuracy, the size of the dataset may be artificially increased by generating label-preserving distortions such as 4 rotations, flips in each rotation, 12 translations (wrap side and up) and cropping the 256x256 input image into 30 randomly cropped 227x227 regions. This increases the dataset size by 50x to 3 million images. (Note that this data augmentation is performed once the dataset is split into training, validation and test sets. Else validating/testing would be performed for different distortions of the same training images).

The training parameters for CNN may be as follows. For CNNs, the learning rate is 0.001, step size is 20000, weight decay is 0.0005, momentum is 0.9 and batch size of 50. For deeper layer CNNs, the learning rate is 0.0001 and the step size is 200000. Since 12, 16, 20, 24-layer CNNs are trained from scratch the learning rate may be significantly lower and the step size is higher than the 8-layer CNN.

Leather: The test accuracy across 30,000 leather samples may be the following. (After data augmentation, the size of the dataset may be increases to 1.5 million images). For the bag of visual words model, the average test accuracy after 10-fold cross validation may be about 93.8%. k-NN based method tends to perform lower than the SVM based method and DSIFT performs slightly better than the DAISY descriptor. If the descriptor size in DAISY is increased, higher accuracy rates may be achievable. For the CNNs, the average test accuracy may be 98.1%. The last layer is a 20-way softmax classifier to classify 20 types of leather.

Fabric: The average test accuracy for the bag of words model may be 92%. One of the reasons for the decrease in accuracy rate compared to leather samples may be due to increase in the class size. The test accuracy for CNNs may be 98.3%. The data augmentation and dropout techniques increase the accuracy rates when compared to the bag of visual words model. Due to data augmentation the dataset increases to 300,000 images.

Bags: The images may be classified on per brand basis. The brands in the dataset may be LV, CHANEL, GUCCI, PRADA, COACH, MICHAEL KORS and CHLOE. While a 7-way classification is possible, since authentic and fake bags of each brand may be used, a binary classification may be performed. Given an input image of a bag of a particular brand, it may be determined whether each is an authentic version or a fake version of that brand. The reason binary classification may be used instead of multi-class classification is the following: (i) Bags of different brands might use the same materials. Hence classifying the same material across different brands would result in inconsistent results. (ii) Conducted experiments may try to mimic the real world scenario. If a person buys a luxury designer bag of a particular brand, then they would want to know the authenticity of that bag given the brand name. So instead of classifying the bags across all brands, a binary classification (authentic or fake) may be performed on a per brand basis.

Across 20,000 images (dataset increases to 1 million images after data augmentation) the test accuracy of bag of visual words model may be 92.4%. Thus SVM based methods may work better than the k-NN based methods. For CNNs, the average test accuracy may be 98.5%. The bags have different types of surfaces, ranging from leather, fabric, canvas to metal logos, gold plated logos, zipper and so on. The data augmentation techniques and deep architecture of CNNs help in increasing the accuracy rates.

Plastic: This may be a 10-way classification across 10 different types of plastic materials. The average test accuracy for bag of words model may be 92.5%. For CNNs, the average test accuracy may be 95.3%.

Paper: The average test accuracy for paper across 2000 images and 10 types of paper may be, 94.3% for the bag of words model and 95.1% for the CNNs. The results of both bag of words and CNNs are comparable with respect to classification of paper samples.

Jersey: With NFL jerseys binary classification may also be performed. Given an input image, it may be determined whether the image is authentic or fake. The average test accuracy for bag of words model may be 94% and CNNs may be 98.8%. Deep layered CNNs may be able to capture the fine-grained details in some of the images, which may give it a superior performance compared to the rest of the methods.

Pills: In this dataset, as fake pills need not be used, binary classification may be used for classifying two different types of pills. The average test accuracy for bag of words model may be 96.8% and for CNNs it may be 98.5%.

R-CNN: With R-CNN, since 2000 regions per image may be obtained, testing may be performed on 1000 bags. (Note that the dataset now is 2 million images) The 10-fold cross validation test accuracy may be 98.9 which is higher than 8-layer and 12-layer CNN. This shows that R-CNN is able to classify fine-grained features that both 8-layer and 12-layer miss out.

Training phase: In the training phase, microscopic images may be extracted from different products or classes of products to form a training set. Then the images may be trained and tested to generate a model that is ready for authentication. In the case of authenticating luxury handbags, bags of one particular brand may be acquired and multiple microscopic images may be extracted using the device described herein. Every region of the handbag may be scanned: dust bag, outer material, outer stitches, inner leather, inner zipper, inner logo, outer leather trim, outer zipper, inner liner. The images may be uploaded, processed and trained in the backend server. This procedure may be done for both authentic and counterfeit bags. Once trained, cross validated and tested the model may ready for the authentication phase.

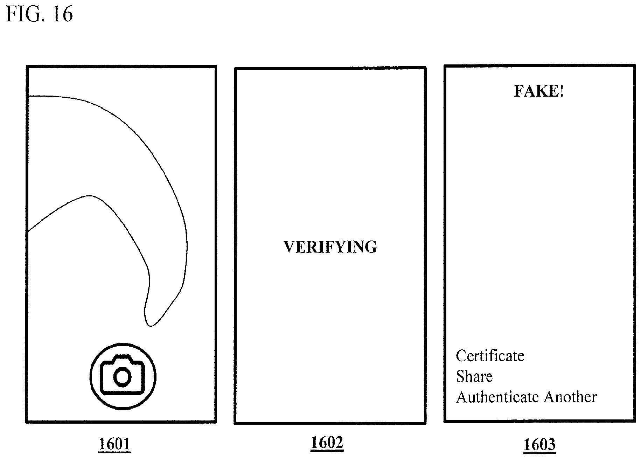

As shown in Figure 16, during the authentication phase the steps may be performed as follows. (i) the user opens the mobile app, places the device on the object, (ii) the device streams live video of the microscopic surface of the object via WiFi onto the app in 1601, (iii) the user captures the image (or multiple images) using the app and uploads it to the server in 1602, (iv) in a few seconds the server responds with a message saying the object the was either "Authentic" or "Fake" in 1603. A mobile application, such as one designed for IOS, a mobile operating system provided by APPLE, INC., that interacts with the device and the server may be used for the authentication phase. In cases, such as handbags the user uploads multiple images from different regions of the bag to check for authenticity. Since the so called "superfake" bags tend to use the same material on some regions, images may be captured from multiple regions and check for authenticity.

Exemplary embodiments of the present invention may differ from known approaches in three significant ways. (i) In overt/covert techniques, they need to apply their technique at the source of creation or manufacturing of the product. Whereas in the instant case, testing need not be performed at the source of manufacturing of the product. Unlike overt technologies such as inks, barcodes, holograms, microstructures etc., exemplary embodiments of the present invention do not need to embed any substance within the product or object.

The techniques described herein may be non-invasive and would not modify the object in any way. (ii) There is no need to tag every single item. Classification of original and duplicate may be based on the microscopic variations procured from images. (iii) Current overt/covert authentication techniques cannot authenticate objects there were not tagged earlier. In the present approach, since machine learning techniques are used, new instances of the object may be authenticated. (iv) Most techniques such as nano-printing, micro-taggants are expensive to embed onto the product. Plus their detection based on specialized, expensive microscopic handheld devices which is a problem in consumer/enterprise adoption. Exemplary embodiments of the present invention may use a device and cloud based authentication solution that works with a mobile phone and is low cost and simple to use.

Image classification using machine learning supervised, semi-supervised and unsupervised learning techniques are used in large scale classification of images. SVM and Convolutional neural networks are two important techniques in large scale image classification. Exemplary embodiments of the present invention differ from these approaches in at least three ways: (i) Feature extraction and training to identify microscopic variations, (ii) classifying microscopic images of objects based on the mid-level and fine-grained features, and (iii) using a combination of techniques (e.g. BoW, deep convolutional nets) and microscopic imaging hardware in order to authenticate objects.

### Exemplary Anomaly/Novelty Detection

The input image may be split into smaller chunks using a sliding window of varying size. Feature extraction may be performed on each chunk: Laplacian of Gaussian to detect keypoints and histogram of oriented gradients to generate distinctive descriptors from the keypoints.

In some embodiments, each descriptor may be a vector in 128-dimensional space. All the image chunks obtained from varying window sizes may be projected onto the 128-dimensional vector space. Similarly, all the images from the training set may be projected onto the vector space, forming a training set of vectors which can be compared to candidate vectors at a later point during the testing phase.

In some embodiments, density of the training vectors may be determined by using the OPTICS algorithm (Ordering points to identify the clustering structure). While the OPTICS algorithm finds the clusters in the training set, the entire training set may be treated as a single cluster by combining the densities of all the sub-clusters in the training set.

Once the cluster and its density are determined for the training set, the testing phase may begin. A candidate image of an item that needs to be classified as authentic or non-authentic may be extracted using the hardware that is used for microscopic imaging. The descriptor vectors may be generated using the feature extraction algorithm and the vectors are projected onto the 128-dimensional space. The density of these test vectors may be computed using the OPTICS algorithm.

Density comparison: Given the density of the training set and the test set, a threshold may be set to determine whether the test set is part of the training. This also may determine the amount of overlap of the training and the test set. According to some exemplary embodiments of the present invention, the higher the overlap, the better is the possibility that the test vector is close to the original training set.

In multi-class classification, it might not be possible to use anomaly detection techniques because anomaly detection techniques may entail a two-class classification problem. While they can find clusters in training data, a SVM for classification (similar to the bag of visual words technique discussed above) would be used. Exemplary embodiments of the present invention may primarily detect authentic image from fake, so it is a two-class problem and anomaly detection may work well in this case.

### Exemplary System

The overall system to authenticate physical objects uses a combination of learning techniques. In some embodiments, the steps comprise:
Training phase: In the training phase, the microscopic images are extracted from different products or classes of products to form a training set. The extracted microscopic images are divided into chunks (overlap or non-overlapping) and these chunks are used as the training dataset to the classification system. The training dataset also contains classes or class definitions that describe the products. A class definition is based on product specifications (name, product line, brand, origin and label) or related to the manufacturing process of the product. For example, it can be a brand of a bag, watch, specification of an electronic chip, etc.).

The image chunks are given as input to the SVM, convnet, and anomaly detection systems and they are classified accordingly.

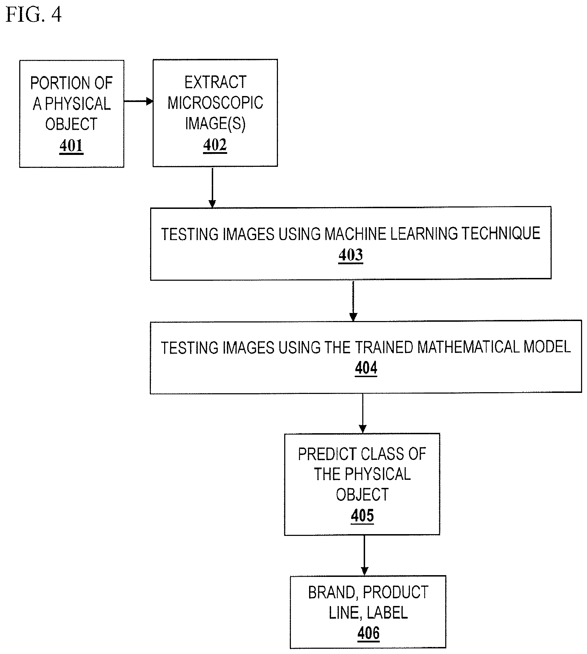

Testing phase: In the testing phase or authentication phase referred in Figure 4, one or more microscopic images of a physical object are extracted. Based on the application, images from different regions of the object may be extracted, to get a diverse set of images. Also extracting images from different regions in an object deters counterfeiters, and increases counterfeit detection rates. The counterfeiters might be able to clone one part of the object, but cloning different parts of the object might be economically unfeasible.

As shown in FIG. 2, first, microscopic images are extracted from a device 2001. The extracted microscopic image is divided into chunks 2002 (e.g. overlap or non-overlapping). The chunks are used as input to the classification system. Each chunk is used as input to the bag of visual words system 2003, convnet 2004 and anomaly detection 2005 systems.

The result (e.g. classification output) of each system may be tabulated and only if there is majority (2:1 or more) 2006; that image or chunk is deemed as authentic (if the majority does not hold up, then the image is deemed as non-authentic). In some embodiments, a threshold may be specified on the number of authentic chunks in an image. If the number of authentic chunks in an image is above the threshold, then the image is considered authentic otherwise it may be deemed non-authentic. In either case, results are provided 2007.

In some embodiments where there is a multi-class classification problem, where the number of classes is greater than two (e.g. authentic or non-authentic), then the system may output the name of class. As stated earlier, classes may be based on product specification such as the name of products, product lines, labeling on the product, brands; or it can be related to the manufacturing process (materials, steps of manufacturing) of the product. For example, if there are ten classes/brands of bags in the training dataset, then in the testing phase, the system may output one class among the ten classes as the answer of the classification system.

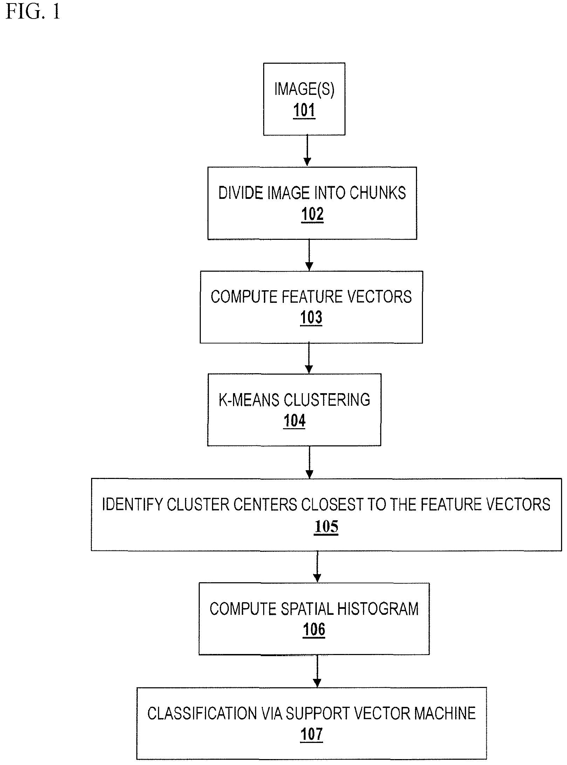

FIG. 1 shows the exemplary classification system using bag of visual words according to exemplary embodiments of the present invention. Images are extracted using the devices from a portion of the physical object 101 and divided into chunks 102. Then, feature vectors are computed using gradient histograms and other exemplary feature detection techniques 103; feature vectors are clustered using k-means clustering 104 and cluster centers are identified that correspond to the feature vectors of the image(s) 105; spatial histogram is computed 106 and finally these histogram features are used as input to a support vector machine classifier 107.

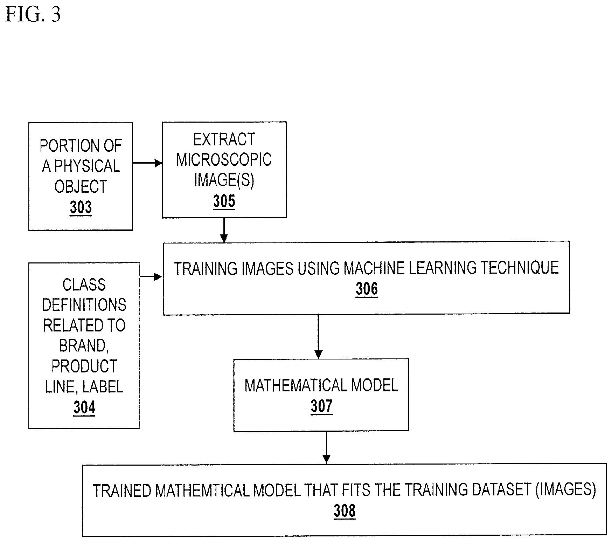

FIG. 3 shows the exemplary classification system based on machine learning techniques. A single or multiple microscopic images 305 are extracted from a portion of the physical object 303 and used are training data for the machine learning technique 306. Class definitions 304 that correspond to the brand of the physical object, product line, label or manufacture process or specifications is added to the training data. The machine learning technique uses the training data to generate a mathematical model 307 and computes the model to fit the training data 308.

FIG. 4 shows the exemplary testing phase of the classification system based on machine learning techniques. A single or multiple microscopic images 402 is extracted from a portion of the physical object 401. This information is fed into the testing phase of the machine learning technique 403. The testing phase uses the trained mathematical model 404 to predict the class of the physical object 405. The class of object might be the brand, product line or specification 406.

Exemplary embodiments of the present invention have practical applications in the luxury goods market. In the luxury market, counterfeit goods are quite rampant. The system described herein can help in authenticating handbags, shoes, apparel, belts, watches, wine bottles, packaging and other accessories.

Exemplary embodiments of the present invention have practical applications in the sporting goods market. In sporting goods, the system can authenticate jerseys, sports apparel, golf clubs and other sports accessories.

Exemplary embodiments of the present invention have practical applications in the cosmetics market. In recent times, MAC make-up kits are being counterfeited. The system may be used in authenticating MAC make-up kits, and other health and beauty products.

Exemplary embodiments of the present invention have practical applications in the pharmaceutical industry. Counterfeiting of medicines/drugs is major problem worldwide. Prescription drugs such as VIAGRA, CIALIS, antibiotics such as ZITHROMAX, TAMIFLY, PREVNAR; cardiovascular drugs such as LIPITOR, NORVASC, PLAVIX and other over-the-counter medications such as CLARITIN, CELEBREX, VICODIN are routinely counterfeited. By using the system users/patients can check whether a medication is genuine or fake.

Exemplary embodiments of the present invention have practical applications in the consumer and industrial electronics markets. Counterfeiting electronics stem not only from manufacturing sub-standard parts, but reusing the original parts by blacktopping and other processes. From expensive smartphones, batteries, to electronic chips and circuits. The system could be part of the supply chain and authenticate electronics as it passes through different vendors in the supply chain. Blacktopped electronic parts and circuits may be identified and classified.

Exemplary embodiments of the present invention have practical applications in the market for automobile and aviation parts. The auto parts industry is constantly plagued with counterfeit parts. Holograms, labels and barcodes are used by the manufacturers and vendors, but the counterfeiters always get around it. Airline parts, air-bags and batteries are some of the most counterfeited parts in the market.

Exemplary embodiments of the present invention have practical applications in the field of children's toys. Substandard toys can be harmful to kids who play with them. Lead is used in manufacturing of cheap toys and this can cause serious health problems. The system can check the authenticity of toys, thereby helping the parents (and in turn kids) to select genuine toys.

Exemplary embodiments of the present invention have practical applications in the field of finance and monetary instruments. The financial system is full of forgery and counterfeit issues. The system can check for counterfeit currency, checks, money orders and other paper related counterfeit problems. By examining the microscopic similarities and dissimilarities in the paper surface, letters, ink blobs, curves, items may be classified as authentic or non-authentic.

In some embodiments, the object authentication space, the related work can be categorized into two sets. (i) Object authentication using overt and covert technology, and (ii) Image classification using machine learning.

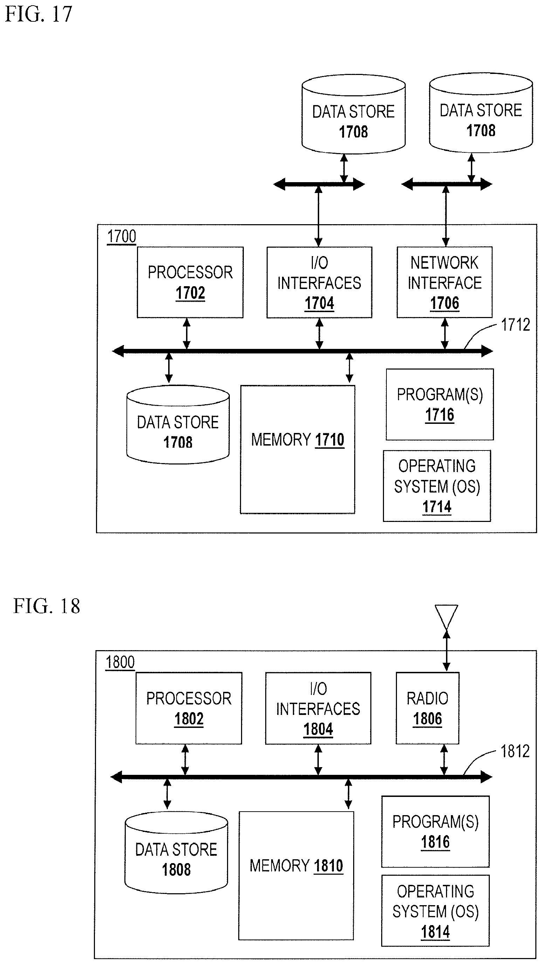

Referring to FIG. 17, in an exemplary embodiment, a block diagram illustrates a server 1700 which may be used in the system 306, in other systems, or standalone. The server 1700 may be a digital computer that, in terms of hardware architecture, generally includes a processor 1702, input/output (I/O) interfaces 1704, a network interface 1706, a data store 1708, and memory 1710. It should be appreciated by those of ordinary skill in the art that FIG. 17 depicts the server 1700 in an oversimplified manner, and a practical embodiment may include additional components and suitably configured processing logic to support known or conventional operating features that are not described in detail herein. The components (1702, 1704, 1706, 1708, and 1710) are communicatively coupled via a local interface 1712. The local interface 1712 may be, for example but not limited to, one or more buses or other wired or wireless connections, as is known in the art. The local interface 1712 may have additional elements, which are omitted for simplicity, such as controllers, buffers (caches), drivers, repeaters, and receivers, among many others, to enable communications. Further, the local interface 1712 may include address, control, and/or data connections to enable appropriate communications among the aforementioned components.

The processor 1702 is a hardware device for executing software instructions. The processor 1702 may be any custom made or commercially available processor, a central processing unit (CPU), an auxiliary processor among several processors associated with the server 1700, a semiconductor-based microprocessor (in the form of a microchip or chip set), or generally any device for executing software instructions. When the server 1700 is in operation, the processor 1702 is configured to execute software stored within the memory 1710, to communicate data to and from the memory 1710, and to generally control operations of the server 1700 pursuant to the software instructions. The I/O interfaces 1704 may be used to receive user input from and/or for providing system output to one or more devices or components. User input may be provided via, for example, a keyboard, touch pad, and/or a mouse. System output may be provided via a display device and a printer (not shown). I/O interfaces 1704 may include, for example, a serial port, a parallel port, a small computer system interface (SCSI), a serial ATA (SATA), a fibre channel, Infiniband, iSCSI, a PCI Express interface (PCI-x), an infrared (IR) interface, a radio frequency (RF) interface, and/or a universal serial bus (USB) interface.

The network interface 1706 may be used to enable the server 1700 to communicate on a network, such as the Internet, a wide area network (WAN), a local area network (LAN), and the like, etc. The network interface 1706 may include, for example, an Ethernet card or adapter (e.g., 10BaseT, Fast Ethernet, Gigabit Ethernet, 10GbE) or a wireless local area network (WLAN) card or adapter (e.g., 802.11a/b/g/n). The network interface 306 may include address, control, and/or data connections to enable appropriate communications on the network. A data store 1708 may be used to store data. The data store 1708 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1708 may incorporate electronic, magnetic, optical, and/or other types of storage media. In one example, the data store 1708 may be located internal to the server 1700 such as, for example, an internal hard drive connected to the local interface 1712 in the server 1700. Additionally in another embodiment, the data store 1708 may be located external to the server 1700 such as, for example, an external hard drive connected to the I/O interfaces 1704 (e.g., SCSI or USB connection). In a further embodiment, the data store 1708 may be connected to the server 1700 through a network, such as, for example, a network attached file server.

The memory 1710 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 1710 may incorporate electronic, magnetic, optical, and/or other types of storage media. Note that the memory 1710 may have a distributed architecture, where various components are situated remotely from one another, but can be accessed by the processor 1702. The software in memory 1710 may include one or more software programs, each of which includes an ordered listing of executable instructions for implementing logical functions. The software in the memory 1710 includes a suitable operating system (O/S) 1714 and one or more programs 1716. The operating system 1714 essentially controls the execution of other computer programs, such as the one or more programs 1716, and provides scheduling, input-output control, file and data management, memory management, and communication control and related services. The one or more programs 1716 may be configured to implement the various processes, algorithms, methods, techniques, etc. described herein

Referring to FIG. 18, in an exemplary embodiment, a block diagram illustrates a client device or sometimes mobile device 1800, which may be used in the system 1800 or the like. The mobile device 1800 can be a digital device that, in terms of hardware architecture, generally includes a processor 1802, input/output (I/O) interfaces 1804, a radio 1806, a data store 1808, and memory 1810. It should be appreciated by those of ordinary skill in the art that FIG. 18 depicts the mobile device 1800 in an oversimplified manner, and a practical embodiment may include additional components and suitably configured processing logic to support known or conventional operating features that are not described in detail herein. The components (1802, 1804, 1806, 1808, and 1810) are communicatively coupled via a local interface 1812. The local interface 1812 can be, for example but not limited to, one or more buses or other wired or wireless connections, as is known in the art. The local interface 1812 can have additional elements, which are omitted for simplicity, such as controllers, buffers (caches), drivers, repeaters, and receivers, among many others, to enable communications. Further, the local interface 1812 may include address, control, and/or data connections to enable appropriate communications among the aforementioned components.

The processor 1802 is a hardware device for executing software instructions. The processor 1802 can be any custom made or commercially available processor, a central processing unit (CPU), an auxiliary processor among several processors associated with the mobile device 1800, a semiconductor-based microprocessor (in the form of a microchip or chip set), or generally any device for executing software instructions. When the mobile device 1800 is in operation, the processor 1802 is configured to execute software stored within the memory 1810, to communicate data to and from the memory 1810, and to generally control operations of the mobile device 1800 pursuant to the software instructions. In an exemplary embodiment, the processor 1802 may include a mobile optimized processor such as optimized for power consumption and mobile applications. The I/O interfaces 1804 can be used to receive user input from and/or for providing system output. User input can be provided via, for example, a keypad, a touch screen, a scroll ball, a scroll bar, buttons, bar code scanner, and the like. System output can be provided via a display device such as a liquid crystal display (LCD), touch screen, and the like. The I/O interfaces 1804 can also include, for example, a serial port, a parallel port, a small computer system interface (SCSI), an infrared (IR) interface, a radio frequency (RF) interface, a universal serial bus (USB) interface, and the like. The I/O interfaces 1804 can include a graphical user interface (GUI) that enables a user to interact with the mobile device 1800. Additionally, the I/O interfaces 404 may further include an imaging device, i.e. camera, video camera, etc.

The radio 1806 enables wireless communication to an external access device or network. Any number of suitable wireless data communication protocols, techniques, or methodologies can be supported by the radio 1806, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; Long Term Evolution (LTE); cellular/wireless/cordless telecommunication protocols (e.g. 3G/4G, etc.); wireless home network communication protocols; paging network protocols; magnetic induction; satellite data communication protocols; wireless hospital or health care facility network protocols such as those operating in the WMTS bands; GPRS; proprietary wireless data communication protocols such as variants of Wireless USB; and any other protocols for wireless communication. The data store 1808 may be used to store data. The data store 1808 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 1808 may incorporate electronic, magnetic, optical, and/or other types of storage media.

The memory 1810 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 1810 may incorporate electronic, magnetic, optical, and/or other types of storage media. Note that the memory 1810 may have a distributed architecture, where various components are situated remotely from one another, but can be accessed by the processor 1802. The software in memory 1810 can include one or more software programs, each of which includes an ordered listing of executable instructions for implementing logical functions. In the example of FIG. 18, the software in the memory 1810 includes a suitable operating system (O/S) 1814 and programs 1816. The operating system 1814 essentially controls the execution of other computer programs, and provides scheduling, input-output control, file and data management, memory management, and communication control and related services. The programs 1816 may include various applications, add-ons, etc. configured to provide end user functionality with the mobile device 1800. For example, exemplary programs 1816 may include, but not limited to, a web browser, social networking applications, streaming media applications, games, mapping and location applications, electronic mail applications, financial applications, and the like. In a typical example, the end user typically uses one or more of the programs 1816 along with a network such as the system 306.

The foregoing merely illustrates the principles of the disclosure. Various modifications and alterations to the described embodiments will be apparent to those skilled in the art in view of the teachings herein. Various different exemplary embodiments can be used together with one another, as well as interchangeably therewith, as should be understood by those having ordinary skill in the art.

## Claims

1. A method for classifying a microscopic image, comprising:
receiving (101) a training dataset comprising at least one microscopic image extracted from a physical object and an associated class definition for the at least one microscopic image that is based on a product specification corresponding to the physical object;
splitting (102) the microscopic image of the received training dataset into chunks of smaller images;
training (306) a plurality of machine learning classifiers to construct a model to classify the at least one microscopic image into one or more classes based on the training dataset, respectively;
receiving (404) the at least one microscopic image as test input to each of the plurality of machine learning classifiers to classify (405) the at least one microscopic image using the constructed model into one or more classes based on the product specification,
wherein the product specification includes (406) a name of a brand, a product line, or other details on a label of the physical object,
wherein the class definition comprises information on whether the physical object is original or counterfeit, and
wherein a first machine learning classifier of the plurality of machine learning classifiers is a convolutional neural network (2004) that is selected from among a one-stage convolutional neural network, a two-stage convolutional neural network, and a three-stage convolutional neural network, selected according to classification accuracy,
wherein:
the one-stage convolutional neural network includes a convolution layer and a sub-sampling layer, after which outputs are fully connected neural networks and trained using backpropagation;
the two-stage convolutional neural network includes two sets of alternating convolution and sub-sampling layers, wherein a final two layers of which are fully connected and trained using the backpropagation; and
the three-stage convolutional neural network includes three sets of alternating convolution and sub-sampling layers, wherein a final two layers of which are fully connected and all layers of which are trained using the backpropagation,
wherein a second machine learning classifier of the plurality of machine learning classifiers comprises a support vector machine based classifier (2003), comprising of feature extraction, keypoint descriptor generation by histogram of oriented gradients and bag of visual words based classifier, wherein the bag of visual words classifier comprises a k-means clustering technique, indexing image descriptors as k-centers and spatial histogram generation,
wherein a third machine learning classifier of the plurality of machine learning classifiers comprises an anomaly detection system (2005) which classifies the physical object based on density estimation of clusters,
determining (2006) that the physical object is original, if more than one of the first, second and third machine learning classifiers classify the at least one microscopic image into a class of the physical object which indicates that the physical object is original.

2. The method of claim 1, wherein the classification determines authenticity of the physical object, and the physical object includes one or more of handbags, shoes, apparel, belts, watches, wine bottles, packaging, labels, accessories, jerseys, sports apparel, golf clubs, cosmetics, medicines, pharmaceutical drugs, electronic chips, circuits, phones, batteries, auto parts, airline parts, airbags, currency notes, paper documents, toys, and food products.

3. A system for classifying a microscopic image comprising:
a training dataset unit storing a dataset including at least one microscopic image extracted from a physical object and associated class definitions based on a product specification or a manufacturing process specification;
a splitting device configured to split the microscopic image of the stored dataset into chunks of smaller images;
a computing device configured to training a plurality of machine learning classifiers to recognize classes of objects using the training dataset, and
using the at least one microscopic image as test input to each of the plurality of machine learning classifiers to determine a class of the physical object,
wherein the class definition comprises information on whether the physical object is original or counterfeit, and
wherein a first machine learning classifier of the plurality of machine learning classifiers is a convolutional neural network that is selected from among a one-stage convolutional neural network, a two-stage convolutional neural network, and a three-stage convolutional neural network, selected according to classification accuracy,
wherein:
the one-stage convolutional neural network includes a convolution layer and a sub-sampling layer, after which outputs are fully connected neural networks and trained using backpropagation;
the two-stage convolutional neural network includes two sets of alternating convolution and sub-sampling layers, wherein a final two layers of which are fully connected and trained using the backpropagation; and
the three-stage convolutional neural network includes three sets of alternating convolution and sub-sampling layers, wherein a final two layers of which are fully connected and all layers of which are trained using the backpropagation,
wherein a second machine learning classifier of the plurality of machine learning classifiers comprises a support vector machine based classifier, comprising of feature extraction, keypoint descriptor generation by histogram of oriented gradients and bag of visual words based classifier, wherein the bag of visual words classifier comprises a k-means clustering technique, indexing image descriptors as k-centers and spatial histogram generation,
wherein a third machine learning classifier of the plurality of machine learning classifiers comprises an anomaly detection system which classifies the physical object based on density estimation of clusters,
a voting device configured to determine that the physical object is original, if more than one of the first, second and third machine learning classifiers determine the class of the physical object to be original.

## Patentansprüche

1. Verfahren zum Klassifizieren eines mikroskopischen Bildes, wobei das Verfahren umfasst:
Empfangen (101) eines Trainingsdatensatzes, der mindestens ein mikroskopisches Bild umfasst, das von einem physischen Objekt extrahiert wurde, und eine zugehörige Klassendefinition für das mindestens eine mikroskopische Bild umfasst, die auf einer dem physischen Objekt entsprechenden Produktspezifikation basiert;
Teilen (102) des mikroskopischen Bildes des empfangenen Trainingsdatensatzes in Bruchstücke aus kleineren Bildern; Trainieren (306) mehrerer Klassifizierer für maschinelles Lernen, um ein Modell zum jeweiligen Klassifizieren des mindestens einen mikroskopischen Bildes in eine oder mehrere Klassen auf der Grundlage des Trainingsdatensatzes zu erstellen;
Empfangen (404) des mindestens einen mikroskopischen Bildes als Testeingabe in jeden der mehreren Klassifizierer für maschinelles Lernen, um das mindestens eine mikroskopische Bild unter Verwendung des erstellten Modells in eine oder mehrere Klassen auf der Grundlage der Produktspezifikation zu klassifizieren (405),
wobei die Produktspezifikation einen Namen einer Marke, eine Produktlinie oder andere Details auf einem Etikett des physischen Objekts enthält (406),
wobei die Klassendefinition Informationen darüber enthält, ob das physische Objekt ein Original oder eine Fälschung ist, und
wobei ein erster Klassifizierer für maschinelles Lernen aus den mehreren Klassifizierern für maschinelles Lernen ein neuronales Faltungsnetz (2004) ist, das aus einem einstufigen neuronalen Faltungsnetz, einem zweistufigen neuronalen Faltungsnetz und einem dreistufigen neuronalen Faltungsnetz ausgewählt wird, die gemäß der Klassifikationsgenauigkeit ausgewählt werden,
wobei:
das einstufige neuronale Faltungsnetz eine Faltungsschicht und eine Unterabtastschicht enthält, nach der die Ausgaben vollständig verbundene neuronale Netze sind und unter Verwendung von Rückpropagation trainiert werden;
das zweistufige neuronale Faltungsnetz zwei Sätze von abwechselnden Faltungsschichten und Unterabtastschichten enthält, wobei deren letzte zwei Schichten vollständig verbunden sind und unter Verwendung der Rückpropagation trainiert werden; und
das dreistufige neuronale Faltungsnetz drei Sätze von abwechselnden Faltungsschichten und Unterabtastschichten enthält, wobei deren letzte zwei Schichten vollständig verbunden sind und alle Schichten unter Verwendung der Rückpropagation trainiert werden,
wobei ein zweiter Klassifizierer für maschinelles Lernen aus den mehreren Klassifizierern für maschinelles Lernen einen auf einer Support-Vektor-Maschine basierten Klassifizierer (2003) umfasst, der eine Merkmalsextraktion, eine Schlüsselpunktdeskriptor-Generierung durch Histogramm von orientierten Gradienten und einen Bag-of-visual-Wordsbasierten Klassifizierer umfasst, wobei der Bag-of-visual-Words-basierte Klassifizierer eine k-means-Cluster-Technik, eine Indizierung von Bilddeskriptoren als k-Zentren und eine räumliche Histogramm-Generierung umfasst,
wobei ein dritter Klassifizierer für maschinelles Lernen aus den mehreren Klassifizierern für maschinelles Lernen ein Anomaliedetektionssystem (2005) umfasst, das das physische Objekt auf der Grundlage einer Dichteschätzung von Clustern klassifiziert,
Bestimmen (2006), dass das physische Objekt ein Original ist, wenn mehr als einer des ersten, des zweiten und des dritten Klassifizierers für maschinelles Lernen das mindestens eine mikroskopische Bild in eine Klasse des physischen Objekts klassifiziert, die angibt, dass das physische Objekt ein Original ist.

2. Verfahren nach Anspruch 1, wobei das Klassifizieren die Echtheit des physischen Objekts bestimmt und das physische Objekt eines oder mehrere von Folgendem umfasst: Handtaschen, Schuhe, Bekleidung, Gürtel, Armbanduhren, Weinflaschen, Verpackungen, Etiketten, Accessoires, Trikots, Sportbekleidung, Golfschläger, Kosmetika, Arzneimittel, Pharmazeutika, elektronische Chips, Schaltkreise, Telefone, Batterien, Autoteile, Flugzeugteile, Airbags, Geldscheine, Papierdokumente, Spielzeug und Lebensmittelprodukte.

3. System zum Klassifizieren eines mikroskopischen Bildes, wobei das System umfasst:
eine Trainingsdateneinheit, die einen Datensatz speichert, der mindestens ein mikroskopisches Bild enthält, das von einem physischen Objekt extrahiert wurde, sowie zugehörige Klassendefinitionen enthält, die auf einer Produktspezifikation oder einer Herstellungsprozessspezifikation basieren;
eine Teilungsvorrichtung, die dafür eingerichtet ist, das mikroskopische Bild des gespeicherten Datensatzes in Bruchstücke aus kleineren Bildern zu teilen;
eine Computervorrichtung, die dafür eingerichtet ist, unter Verwendung des Trainingsdatensatzes mehrere Klassifizierer für maschinelles Lernen darauf zu trainieren, Klassen von Objekten zu erkennen, und
Verwenden des mindestens einen mikroskopischen Bildes als Testeingabe in jeden der mehreren Klassifizierer für maschinelles Lernen, um eine Klasse des physischen Objekts zu bestimmen,
wobei die Klassendefinition Informationen darüber enthält, ob das physische Objekt ein Original oder eine Fälschung ist, und
wobei ein erster Klassifizierer für maschinelles Lernen aus den mehreren Klassifizierern für maschinelles Lernen ein neuronales Faltungsnetz ist, das aus einem einstufigen neuronalen Faltungsnetz, einem zweistufigen neuronalen Faltungsnetz und einem dreistufigen neuronalen Faltungsnetz ausgewählt wird, die gemäß der Klassifikationsgenauigkeit ausgewählt werden,
wobei:
das einstufige neuronale Faltungsnetz eine Faltungsschicht und eine Unterabtastschicht enthält, nach der die Ausgaben vollständig verbundene neuronale Netze sind und unter Verwendung von Rückpropagation trainiert werden;
das zweistufige neuronale Faltungsnetz zwei Sätze von abwechselnden Faltungsschichten und Unterabtastschichten enthält, wobei deren letzte zwei Schichten vollständig verbunden sind und unter Verwendung der Rückpropagation trainiert werden; und
das dreistufige neuronale Faltungsnetz drei Sätze von abwechselnden Faltungsschichten und Unterabtastschichten enthält, wobei deren letzte zwei Schichten vollständig verbunden sind und alle Schichten unter Verwendung der Rückpropagation trainiert werden,
wobei ein zweiter Klassifizierer für maschinelles Lernen aus den mehreren Klassifizierern für maschinelles Lernen einen auf einer Support-Vektor-Maschine basierten Klassifizierer umfasst, der eine Merkmalsextraktion, eine Schlüsselpunktdeskriptor-Generierung durch Histogramm von orientierten Gradienten und einen Bag-of-visual-Wordsbasierten Klassifizierer umfasst, wobei der Bag-of-visual-Words-basierte Klassifizierer eine k-means-Cluster-Technik, eine Indizierung von Bilddeskriptoren als k-Zentren und eine räumliche Histogramm-Generierung umfasst,
wobei ein dritter Klassifizierer für maschinelles Lernen aus den mehreren Klassifizierern für maschinelles Lernen ein Anomaliedetektionssystem umfasst, das das physische Objekt auf der Grundlage einer Dichteschätzung von Clustern klassifiziert,
eine Stimmabgabevorrichtung, die dafür eingerichtet ist zu bestimmen, dass das physische Objekt ein Original ist, wenn mehr als einer des ersten, des zweiten und des dritten Klassifizierers für maschinelles Lernen bestimmt, dass die Klasse des physischen Objekts ein Original ist.

## Revendications

1. Procédé de classification d'une image microscopique, consistant à :
recevoir (101) un jeu de données d'entraînement comprenant au moins une image microscopique extraite d'un objet physique et une définition de classe associée pour ladite au moins une image microscopique qui est basée sur une spécification de produit correspondant à l'objet physique ; fractionner (102) l'image microscopique du jeu de données d'entraînement reçu en blocs d'images plus petites ;
entraîner (306) une pluralité de classificateurs d'apprentissage automatique pour construire un modèle permettant de classifier ladite au moins une image microscopique dans une ou plusieurs classes sur la base du jeu de données d'entraînement, respectivement ;
recevoir (404) ladite au moins une image microscopique en tant qu'entrée de test dans chacun des classificateurs d'apprentissage automatique afin de classifier (405) ladite au moins une image microscopique à l'aide du modèle construit dans une ou plusieurs classes sur la base de la spécification de produit,
dans lequel la spécification de produit contient (406) un nom de marque, une ligne de produits ou d'autres détails sur une étiquette de l'objet physique,
dans lequel la définition de classe comprend des informations indiquant si l'objet physique est original ou contrefait, et
dans lequel un premier classificateur d'apprentissage automatique de la pluralité de classificateurs d'apprentissage automatique est un réseau neuronal convolutif (2004) qui est sélectionné parmi un réseau neuronal convolutif à un étage, un réseau neuronal convolutif à deux étages et un réseau neuronal convolutif à trois étages, sélectionné en fonction de la précision de classification,
dans lequel :
le réseau neuronal convolutif à un étage contient une couche de convolution et une couche de sous-échantillonnage dont les sorties sont des réseaux neuronaux entièrement connectés et entraînés à l'aide de la rétropropagation ;
le réseau neuronal convolutif à deux étages contient deux ensembles de couches de convolution et de sous-échantillonnage alternées dont les deux dernières couches sont entièrement connectées et entraînées à l'aide de la rétropropagation ; et
le réseau neuronal convolutif à trois étages contient trois ensembles de couches de convolution et de sous-échantillonnage alternées dont les deux dernières couches sont entièrement connectées et dont toutes les couches sont entraînées à l'aide de la rétropropagation,
dans lequel un deuxième classificateur d'apprentissage automatique de la pluralité de classificateurs d'apprentissage automatique comprend un classificateur basé sur une machine à vecteurs de support (2003), comprenant une extraction de caractéristiques, une génération de descripteurs de points clés par histogramme de gradients orientés et un classificateur basé sur un sac de mots visuels, dans lequel le classificateur par sac de mots visuels comprend une technique de partitionnement en k-moyennes, une indexation de descripteurs d'image en tant que k-centres et une génération d'histogrammes spatiaux,
dans lequel un troisième classificateur d'apprentissage automatique de la pluralité de classificateurs d'apprentissage automatique comprend un système de détection d'anomalies (2005) qui classifie l'objet physique sur la base d'une estimation de densité des partitions, déterminer (2006) que l'objet physique est original si plus d'un des premier, deuxième et troisième classificateurs d'apprentissage automatique classifient ladite au moins une image microscopique dans une classe de l'objet physique qui indique que l'objet physique est original.

2. Procédé selon la revendication 1, dans lequel la classification détermine l'authenticité de l'objet physique, et l'objet physique contient un ou plusieurs des objets suivants : sacs à main, chaussures, vêtements, ceintures, montres, bouteilles de vin, emballages, étiquettes, accessoires, maillots, vêtements de sport, clubs de golf, cosmétiques, médicaments, produits pharmaceutiques, puces électroniques, circuits, téléphones, batteries, pièces automobiles, pièces d'avion, airbags, billets de banque, documents papier, jouets et produits alimentaires.

3. Système de classification d'une image microscopique comprenant :
une unité de jeu de données d'entraînement stockant un jeu de données contenant au moins une image microscopique extraite d'un objet physique et des définitions de classes associées basées sur une spécification de produit ou une spécification de processus de fabrication ;
un dispositif de fractionnement configuré pour fractionner l'image microscopique du jeu de données stocké en blocs d'images plus petites ;
un dispositif informatique configuré pour entraîner une pluralité de classificateurs d'apprentissage automatique à reconnaître des classes d'objets à l'aide du jeu de données d'entraînement, et
l'utilisation d'au moins une image microscopique comme entrée de test dans chacun de la pluralité de classificateurs d'apprentissage automatique afin de déterminer la classe de l'objet physique,
dans lequel la définition de classe comprend des informations indiquant si l'objet physique est original ou contrefait, et
dans lequel un premier classificateur d'apprentissage automatique de la pluralité de classificateurs d'apprentissage automatique est un réseau neuronal convolutif qui est sélectionné parmi un réseau neuronal convolutif à un étage, un réseau neuronal convolutif à deux étages et un réseau neuronal convolutif à trois étages, sélectionné en fonction de la précision de classification, dans lequel :
le réseau neuronal convolutif à un étage contient une couche de convolution et une couche de sous-échantillonnage dont les sorties sont des réseaux neuronaux entièrement connectés et entraînés à l'aide de la rétropropagation ;
le réseau neuronal convolutif à deux étages contient deux ensembles de couches de convolution et de sous-échantillonnage alternées dont les deux dernières couches sont entièrement connectées et entraînées à l'aide de la rétropropagation ; et
le réseau neuronal convolutif à trois étages contient trois ensembles de couches de convolution et de sous-échantillonnage alternées dont les deux dernières couches sont entièrement connectées et dont toutes les couches sont entraînées à l'aide de la rétropropagation,
dans lequel un deuxième classificateur d'apprentissage automatique de la pluralité de classificateurs d'apprentissage automatique comprend un classificateur basé sur une machine à vecteurs de support, comprenant une extraction de caractéristiques, une génération de descripteurs de points clés par histogramme de gradients orientés et un classificateur basé sur un sac de mots visuels, dans lequel le classificateur par sac de mots visuels comprend une technique de partitionnement en k-moyennes, une indexation de descripteurs d'image en tant que k-centres et une génération d'histogrammes spatiaux,
dans lequel un troisième classificateur d'apprentissage automatique de la pluralité de classificateurs d'apprentissage automatique comprend un système de détection d'anomalies qui classifie l'objet physique sur la base d'une estimation de densité des partitions,
un dispositif de vote configuré pour déterminer que l'objet physique est original si plus d'un des premier, deuxième et troisième classificateurs d'apprentissage automatique déterminent que la classe de l'objet physique est originale.
